# EUROPÄISCHE PATENTSCHRIFT

(11) **EP 1 021 312 B1**
(45) Veröffentlichungstag und Bekanntmachung des Hinweises auf die Patenterteilung: **03.09.2003**
(21) Anmeldenummer: 98960999.5
(22) Anmeldetag: 09.10.1998
(51) Int. Cl.: B60Q 3/04, B60Q 1/14

(54) **EINRICHTUNG ZUR STEUERUNG DER HELLIGKEIT EINER ARMATURENBELEUCHTUNG EINES KRAFTFAHRZEUGES**
DEVICE FOR CONTROLLING THE BRIGHTNESS OF AN INSTRUMENTATION LIGHT OF AN AUTOMOBILE
DISPOSITIF DE COMMANDE DE LA LUMINANCE DE L'ECLAIRAGE DES TABLEAUX ET INSTRUMENTS DE BORD D'UN VEHICULE

(30) Priorität: 10.10.1997 DE 19744922
(43) Veröffentlichungstag der Anmeldung: 26.07.2000
(73) Patentinhaber: ROBERT BOSCH GMBH, 70442 Stuttgart (DE)
(72) Erfinder: HÜRTGEN, Bernd, D-31079 Sibbesse (DE); PÖCHMÜLLER, Werner, D-31139 Hildesheim (DE)
(86) Internationale Anmeldenummer: DE9802988
(87) Internationale Veröffentlichungsnummer: WO99019167

(56) Entgegenhaltungen:
- DE-A- 3 245 299
- FR-A- 2 702 045
- US-A- 5 583 484
- PATENT ABSTRACTS OF JAPAN vol. 010, no. 109 (M-472), 23. April 1986 & JP 60 240545 A (NIPPON DENSO KK), 29. November 1985

## Beschreibung

Die Erfindung betrifft eine Einrichtung zur Steuerung der Helligkeit einer Armaturenbeleuchtung in einem Kraftfahrzeug, bei der ein in Fahrtrichtung ausgerichteter elektro-optischer Wandler in Abhängigkeit von der Umgebungshelligkeit vor dem Kraftfahrzeug mit dem Ausgangssignal die Leuchtdichte der Armaturenbeleuchtung verändert und wobei das Ausgangssignal des elektro-optischen Wandlers über eine Auswerteeinheit mit vorgegebenen Algorithmen bewertet einer Steuereinheit zur Beeinflussung der Helligkeit der Armaturenbeleuchtung zugeführt wird.

Eine Einrichtung dieser Art ist aus der DE-A 32 45 299 bekannt. Dabei wird als elektro-optischer Wandler ein Fotodetektor verwendet, der über einen Lichtleiter mit der Windschutzscheibe des Kraftfahrzeuges verbunden ist. Auf diese Weise erfasst der Fotodetektor die Helligkeit des Umfeldes vor dem Kraftfahrzeug. Das Ausgangssignal des Fotodetektors wird über einen Mikroprozessor mit vorgegebenen Algorithmen bewertet einer Steuereinheit zur Veränderung der Helligkeit der Armaturenbeleuchtung zugeführt. Mit dieser Einrichtung wird die Helligkeit der Umgebung vor dem Kraftfahrzeug nur global erfasst, so dass die Veränderung der Helligkeit der Armaturenbeleuchtung nur unzureichend ist, insbesondere dann, wenn vorausfahrende Objekte oder im Umfeld angeordnete Objekte auftreten.

Eine ähnliche Einrichtung mit einem Fototransistor als elektro-optischer Wandler ist aus der DE 44 09 777 A1 bekannt. Das analoge Ausgangssignal des Fototransistors wird in ein digitales Signal umgewandelt und mit einer Verarbeitungseinrichtung wird die Kennlinie des Fototransistors so kompensiert, dass ein der Umgebungshelligkeit proportionales Signal zur Veränderung der Helligkeit der Armaturenbeleuchtung gewonnen wird.

In Patent-Abstracts of Japan - Vol. 010, no. 109, 23.4.86 & JP 60 24 0545 A (D2) ist eine Einrichtung zum automatischen Ein- und Ausschalten der Frontbeleuchtung eines Kraftfahrzeuges bekannt, wenn dieses in einen Tunnel einfährt und aus diesem ausfährt. Dabei wird die Veränderung der Helligkeit vor dem Kraftfahrzeug mit Hilfe eines Bildsensors, z.B. einer CCD-Kamera, überwacht und die Veränderung über eine Auswerte- und Steuereinheit zum Schalten der Frontbeleuchtung ausgenützt.

Eine CCD-Kamera zur Steuerung der Helligkeit der Armaturenbeleuchtung ist als elektro-optischer Wandler nicht geeignet, da diese einen geringen Dynamikumfang aufweist und keine absolute Helligkeitsbestimmung ermöglicht. Eine absolute Helligkeitsbestimmung wäre nur mit Blenden- und Beleuchtungs-Zeitregelung erreichbar, die jedoch nie genau feststellbar ist.

Es ist Aufgabe der Erfindung, eine Einrichtung der eingangs erwähnten Art so zu verbessern, dass die absolute Umgebungshelligkeit vor dem Kraftfahrzeug erfasst und zur optimalen Anpassung der Helligkeit der Armaturenbeleuchtung ausgenützt wird.

Diese Aufgabe wird nach der Erfindung dadurch gelöst, dass als elektro-optischer Sensor ein longarithmierender CMOS-Bildsensor mit nichtlinearer Umwandlungskennlinie verwendet wird, deren Steigung mit zunehmendem Lichteinfall abnimmt.

Mit diesem neuen Bildsensor mit nichtlinearer Umwandlungskennlinie wird ein extremer Dynamikumfang erreicht, so dass mit dem "flächigen" Ausgangssignal des Bildsensors ein großer Helligkeitsbereich auf einem technisch beschränkten Spannungs- oder Strombereich abgebildet werden kann.

Dabei kann das Ausgangssignal des Bildsensors unter Anwendung geeigneter Objektdetektionsalgorithmen zusätzlich bewertet werden. So kann z.B. vermieden werden, dass ein dunkel lackierter, in geringem Abstand vorausfahrender LKW zu einem zu kleinen Umgebungshelligkeitssignal führt. Eine Objektinformation kann aber auch über zusätzliche Sensoren (Lidar-Radar) gewonnen werden, die der Auswerteeinheit zugeführt und in vorgegebener Weise für die Steuerung der Helligkeit der Armaturenbeleuchtung verwendet wird.

Der Bildsensor ist möglichst hoch hinter der Frontscheibe derart angeordnet, daß er guten Blick auf die Verkehrszone in Fahrtrichtung erlaubt und sich noch im Wischbereich der Scheibenwischer befindet. Dies ist der Fall, wenn der Bildsensor zwischen der Frontscheibe und dem oben, im mittleren Bereich derselben angebrachten Rückspiegel angeordnet ist. In dieser Position läßt sich der Bildsensor optimal zur Realisierung weiterer Funktionen, wie Fahrspurverfolgung, Verkehrszeichenerkennung und Objektdetektion verwenden.

Die Erfindung wird anhand eines in den Zeichnungen dargestellten Ausführungsbeispiels näher erläutert. Es zeigt:
- Fig.: 1 einen Schnitt entlang der Kraftfahrzeuglängsachse mit der Positionierung des Bildsensors,
- Fig. 2: die nichtlineare Umwandlungskennlinie des Bildsensors und

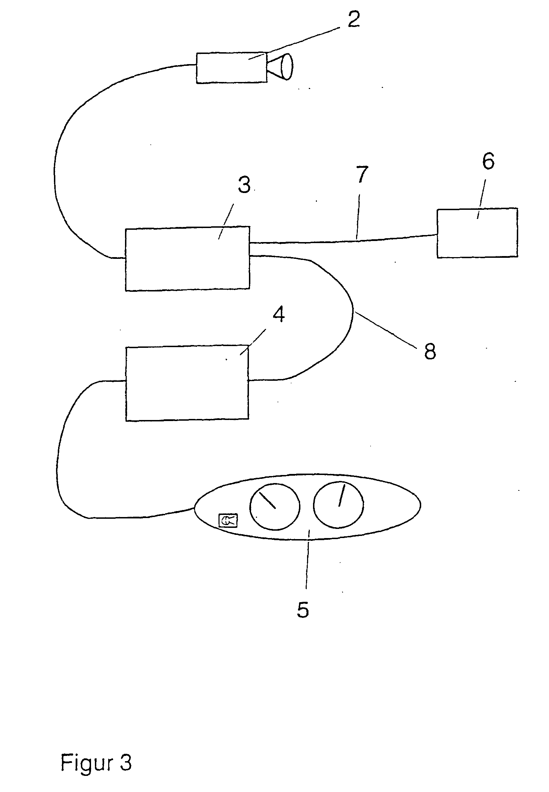

- Fig. 3: im Blockschaltbild die Einrichtung zur Steuerung der Helligkeit der Armaturenbeleuchtung.

Im Innenraum eines Kraftfahrzeuges 1 ist im oberen Bereich hinter der Frontscheibe ein Bildsensor 2(Kamera) angeordnet. Dabei wird vorzugsweise der Raum hinter dem an dieser Stelle angebrachten, nicht dargestellten Rückspiegel ausgenützt. Der Bildsensor 2 ist dabei in Fahrtrichtung ausgerichtet und erfaßt die angedeutete, kegelförmige Verkehrszone vor dem Kraftfahrzeug 1.Der Bildsensor 2, der aus mehreren Einzelsensoren zusammengesetzt ist, mißt die Helligkeit der erfaßten Verkehrszone ortsselektiv, wobei die Helligkeit absolut gemessen wird.

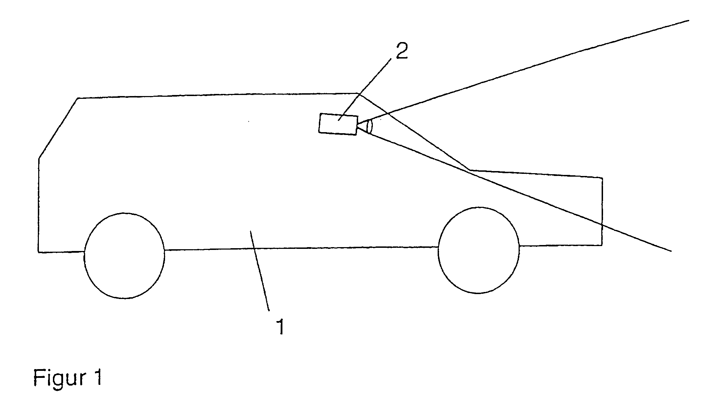

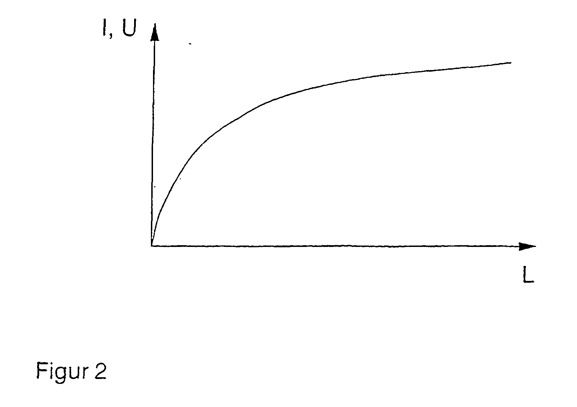

Wie die Fig. 2 zeigt, hat der Bildsensor 2 eine nichtlineare Umwandlungskennlinie. Mit zunehmendem Lichtsignal L nimmt auch die abgegebene Spannung U oder der abgegebene Strom I zu, jedoch nimmt die Steigung ΔU/ΔL bzw. ΔI/ΔL dabei ab. Dies führt zur Realisierung eines hochdynamischen Bildsensors 2. Mit einem technisch begrenzten Spannungs- oder Strombereich kann ein großer Helligkeitsbereich abgebildet werden. Besonders vorteilhaft ist die Verwendung eines Bildsensors mit logarithmischer Umwandlungskennlinie, da dann die Kontrastauflösung über einen Helligkeitsbereich von mehreren Dekaden konstant ist.

Der Bildsensor 2 liefert ein elektrisches "flächiges" Bildsignal an eine Auswerteeinheit 3, die das Bildsignal mit dem Ziel der Umgebungshelligkeitsmessung auswertet. Das Umgebungshelligkeitssignal oder ein bereits abgeleitetes Armaturenhelligkeitssignal wird über eine BUS-Leitung 8 an eine Steuereinheit 4 weitergeleitet, das die Armaturenbeleuchtung 5 steuert. Die Auswerteeinheit 3 kann das Bildsignal des Bildsensors 2 bereits nach vorgegebenen Algorithmen einer Objekterkennung bewerten und zu einer entsprechend veränderten Ansteuerung der Armaturenbeleuchtung 5 nützen. Es können für die Objekterkennung oder für andere Funktionen weitere Sensoren 6 vorgesehen sein, die über eine BUS-Leitung 8 der Auswerteeinheit 3 zusätzliche Informationen zur Veränderung der Ansteuersignale für die Steuereinheit 4 der Armaturenbeleuchtung 5 zuführen. Die Sensoren 6 können zur Objekterfassung und auch zur Erfassung des Zustandes der Fahrzeugbeleuchtung dienen.

## Patentansprüche

1. Einrichtung zur Steuerung der Helligkeit einer Armaturenbeleuchtung in einem Kraftfahrzeug, bei der ein in Fahrtrichtung ausgerichteter elektro-optischer Wandler in Abhängigkeit von der Umgebungshelligkeit vor dem Kraftfahrzeug mit dem Ausgangssignal die Leuchtdichte der Armaturenbeleuchtung verändert und wobei das Ausgangssignal des elektro-optischen Wandlers über eine Auswerteeinheit mit vorgegebenen Algorithmen bewertet einer Steuereinheit zur Beeinflussung der Helligkeit der Armaturenbeleuchtung zugeführt wird,
**dadurch gekennzeichnet,**
**dass** als elektro-optischer Sensor ein logarithmierender CMOS-Bildsensor (2) mit nichtlinearer Umwandlungskennlinie verwendet wird, deren Steigung mit zunehmendem Lichteinfall (L) abnimmt.

2. Einrichtung nach Anspruch 1,
**dadurch gekennzeichnet,**
**dass** der Auswerteeinheit (3) über zusätzliche Sensoren (6) weitere Informationen zuführbar sind.

3. Einrichtung nach Anspruch 1 oder 2,
**dadurch gekennzeichnet,**
**dass** der Bildsensor (2) zwischen der Frontscheibe des Kraftfahrzeugs und einem oben und etwa in der Mitte derselben angebrachten Rückspiegel angeordnet ist.

## Claims

1. Device for controlling the brightness of the dashboard lighting in a motor vehicle, in the case of which an electro-optical transducer aligned in the driving direction varies the luminance of the dashboard lighting with the aid of the output signal as a function of the ambient brightness in front of the motor vehicle, the output signal of the electro-optical transducer being fed via an evaluation unit after evaluation with the aid of prescribed algorithms to a control unit for influencing the brightness of the dashboard lighting, **characterized in that** use is made as electro-optical sensor of a logarithmizing CMOS image sensor (2) having a nonlinear conversion characteristic and whose gradient decreases with increasing light incidence (L).

2. Device according to Claim 1, **characterized in that** the evaluation unit (3) can be fed further information via additional sensors (6).

3. Device according to Claim 1 or 2, **characterized in that** the image sensor (2) is arranged between the windscreen of the motor vehicle and a rear-view mirror fitted above and approximately in the middle of the same.

## Revendications

1. Installation de commande de la luminosité de l'éclairage d'un tableau de bord d'un véhicule, selon lequel un convertisseur électrooptique aligné dans la direction de déplacement modifie la densité lumineuse de l'éclairage et du tableau de bord par son signal de sortie en fonction de la luminosité ambiante en amont du véhicule et le signal de sortie du convertisseur électrooptique est traité par une clé de traitement selon des algorithmes prédéterminés pour être appliqué à une unité de commande et influencer la luminosité de l'éclairage du tableau de bord,
**caractérisée en ce que**
le capteur électrooptique est un capteur d'images CMOS (2) logarithmique, à caractéristique de conversion non linéaire dont la pente diminue en fonction de l'augmentation de la lumière incidente (L).

2. Installation selon la revendication 1,
**caractérisée en ce que**
l'unité d'exploitation (3) reçoit d'autres informations par d'autres capteurs (6).

3. Installation selon les revendications 1 ou 2,
**caractérisée en ce que**
le capteur d'image (2) est installé contre le pare-brise du véhicule et le rétroviseur, en partie haute et sensiblement au milieu du pare-brise.
